(19)

Europäisches
Patentamt
European
Patent Office
Office européen
des brevets

(11)  **EP 3 639 672 A1**

(12)  **EUROPEAN PATENT APPLICATION**

(43) Date of publication:
**22.04.2020  Bulletin 2020/17**

(21) Application number: **19215882.2**

(22) Date of filing: **22.01.2016**

(51) Int Cl.:
**A23D 9/00** *(2006.01)*    **A23D 9/013** *(2006.01)*
**A23D 9/02** *(2006.01)*    **A23G 3/34** *(2006.01)*
**A23G 9/52** *(2006.01)*    **A23L 9/20** *(2016.01)*
**A23L 29/10** *(2016.01)*    **A23P 10/40** *(2016.01)*
**A23P 30/40** *(2016.01)*

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.01.2015  EP 15152093
12.06.2015  EP 15171842**

(62) Document number(s) of the earlier application(s) in
accordance with Art. 76 EPC:
**16714038.3 / 3 247 227**

(71) Applicant: **FrieslandCampina Nederland B.V.
3818LE Amersfoort (NL)**

(72) Inventors:
- **VASBINDER, Astrid Jolanda
6708 WH Wageningen (NL)**
- **KNIEP, Natalie Mareike
6708 WH Wageningen (NL)**

(74) Representative: **FrieslandCampina Nederland
B.V.
Bronland 20
6708 WH Wageningen (NL)**

Remarks:
This application was filed on 13-12-2019 as a
divisional application to the application mentioned
under INID code 62.

(54)  **WHIPPING AGENT FOR USE IN THE PREPARATION OF EDIBLE TOPPINGS AND A METHOD
FOR PREPARING SAID AGENT**

(57)  The invention pertains to a whipping agent which
is free from palm based bulk edible oil and fat and free
from palm based emulsifiers for use in the preparation
of edible toppings comprising on a dry weight basis:
- 25 to 75% by weight of a non-palm based edible oil or fat;
- 5 to 30 % by weight of a non-palm based alpha tending
emulsifier;
- 1 to 15% by weight of a proteinaceous emulsifier; and
- 25 to 60% by weight carbohydrates;
wherein the non-palm based alpha tending emulsifier is an acetic acid ester of a non-palm based vegetable oil;
and which non-palm based alpha tending emulsifier has
been prepared from hydrogenated non-palm vegetable
oils and more than 75% by weight of the fatty acid residues
are stearic acid.

The invention further pertains a process of preparing
an instant edible powder composition comprising the
whipping agent, to a method of preparing the whipping
agent and to a method of preparing a whipped topping.

EP 3 639 672 A1

**Description**

FIELD OF THE INVENTION

The present invention relates to a whipping agent for use in the preparation of edible toppings. The invention further relates to a method for preparing such a whipping agent, to an instant edible powder comprising said whipping agent, a method of preparing a whipped topping comprising the whipping agent and an edible topping prepared from said whipping agent.

BACKGROUND OF THE INVENTION

Whipping agents are well-known products in the food industry. Whipping agents or aerating agents are typically spray-dried compositions comprising fat, one or more emulsifiers, carbohydrates and protein. These powdered compositions are most often used in the preparation of instant desserts, cake filling, ice cream. etc. For example, such desserts are prepared by adding a liquid, e.g. milk, to the instant powder and subsequently whipping the mixture, resulting in a whipped topping. These whipped toppings have a certain stability over time, in which the shape of the whipped topping is substantially retained. These types of instant desserts generally comprise besides the whipping agent and the liquid also sugar, texturizing agents such as hydrocolloids, coloring agents and flavoring agents.

Whipping agents used for preparing the above mentioned kinds of food products generally comprise significant amounts of emulsifiers and edible oil. Emulsifiers are added to foods, in particular whipping agents, for several reasons. They are amongst others used to influence the overrun, consistency, stability and organoleptic properties.

Without wishing to be bound by any theory it is assumed that emulsifiers increase the stability of emulsions through the creation of liquid crystals or by means of cooperative interactions with proteins, which are typically found in food products. Another important functionality of emulsifiers is to induce controlled destabilization. This destabilization is very important in whippable emulsions (e.g. mousse, whipping creams, ice cream etc.) and can be achieved by adding emulsifiers of various polarities. The destabilization process involves several physical changes of the emulsion taking place at low temperature, such as crystallization of the fat phase and partial desorption of interfacial protein, resulting in a decrease in emulsion stability under shear.

The function of emulsifiers, such as monoglycerides, diglycerides or lactic acid esters thereof is thus to decrease the emulsion stability under shear, resulting in the formation of clusters of agglomerated fat particles, which during aeration form a structure around and between the air cells, stabilizing the foam structure. The agglomerated fat phase contributes to the creaminess and the stability of the foam. Besides emulsifiers, whipping agents also comprise a significant amount of an edible (bulk) oil or fat. Until recently, palm kernel oil was, and is, commonly used in these kinds of whipping agents. However, the use of palm based products has become increasingly controversial, due to environmental issues.

Hence, whipping agents have been developed, which do not comprise palm kernel oil or derivates thereof as the edible fat fraction. However, the emulsifiers used are still derived from palm oil, such as lactic acid esters of mono and diglycerides derived from palm oil.

Although, the amount of such emulsifiers used is generally lower than the amount of edible (bulk) fat or oil used, a need remains to also substitute the palm oil based emulsifiers with more sustainable types of emulsifiers, i.e. non palm oil based emulsifiers. This way food manufactures would be able to prepare products which are completely free from palm based emulsifiers and palm based (bulk) oil and fat.

A need thus remains to substitute in whipping agents both the palm based edible (bulk) fat or oil (e.g. palm kernel oil)as well as the palm oil based emulsifiers for non-palm based fats, oils and emulsifiers, whilst maintain a good performance of the whipping agent.

SUMMARY OF THE INVENTION

A first aspect of the present invention relates to a whipping agent for use in the preparation of edible toppings comprising on a dry weight basis:

- 25 to 75% by weight of a non-palm based edible oil or fat;
- 5 to 30 % by weight of a non-palm based alpha tending emulsifier;
- 1 to 15% by weight of a proteinaceous emulsifier; and
- 25 to 60% by weight carbohydrates.

With the present invention it has now for the first time become possible to prepare a whipping agent which is free from palm based (bulk) edible oil and fat and which is also free from palm based emulsifiers and which still has a very good performance with respect to overrun, consistency, stability and organoleptic properties.

A second aspect of the present invention relates to a method for preparing a whipping agent according to the present invention. This method comprises the following steps:

    i. mixing a proteinaceous emulsifier and carbohydrates with water, such that an aqueous mixture is obtained;
    ii. adding the non-palm based edible oil or fat and the non-palm based alpha tending emulsifier to the mixture;
    iii. spray drying said mixture, such that a powder is obtained.

The spray dried powder obtainable by the above mentioned method has a very good shelf-life. Tests have shown that an exceptionally good performance is still obtained after one year of storage of the powder. Even after two years of storage, very good products were prepared from the spray-dried powder.

A third aspect of the present invention relates to an instant edible powder composition comprising the whipping agent according to the present invention and further comprising one or more substances chosen from sugar, milk powder, hydrocolloids, coloring agents, flavoring agents, or a combination thereof.

This instant edible powder may be mixed with a fluid and whipped, such that a stable foam like product is obtained.

A further aspect of the present invention also relates to a method for preparing a whipped topping comprising the whipping of a whipping agent according to the invention in a food acceptable liquid, such as milk, to an overrun of 50-400%.

A last aspect of the present invention relates to an edible topping prepared from the whipping agent according to the present invention.

DEFINITIONS

The term "*whipping agent*" as used herein has its conventional meaning and refers to a dry or liquid composition which may be added to a liquid or may already comprise such liquid and which may be whipped to form an aerated food product.

The term "*non palm based*" as used herein has its conventional meaning and refers to a product (e.g. oil or emulsifier) which has not been based on the oil or fat derived from the fruits (or their kernels) of oil palm trees, in particular Elaeis guineensis.

The term "*palm oil or fractions thereof*" as used herein has its conventional meaning and refers to crude palm oil but also to fractions thereof, such as palm olein, super olein or stearin. Palm oil and its fractions have been prepared from the fruits of palm trees, but not from the kernel.

The term "*palm kernel oil or fractions thereof*" as used herein has its conventional meaning and refers to oil or fractions thereof prepared from the kernel of the fruits of palm trees.

The term "*fat*", "*oil*" or "*lipids*" as used herein have their conventional meaning and refer to particles, including droplets and globules, of esters of glycerol and fatty acids, such as monoglycerides, diglycerides, triglycerides or a mixture thereof, in this regard reference is made to Gunstone et al., The Lipid Handbook, 2007.

The term "*proteinaceous*" as used herein has its conventional meaning and refers to protein or derived from proteins, such as peptides or polypeptides.

The term "*protein*" as used herein has its conventional meaning and refers to a linear polypeptide comprising at least 10 amino acid residues.

The term "*alpha tending emulsifier*" as used herein has its conventional meaning and refers to organic acid esters of mono- and diglycerides wherein most of said esters are present, or are able to crystallize ,in their alpha crystalline form. In this regard reference is made to Gerard L., Hassenhuetti, Food Emulsifiers and their applications, 2008.

The term "*organic acid esters of a non-palm based vegetable oil*" refers to a non-palm vegetable oil or fat wherein at least a part of the free hydroxyl groups of the mono- and diglycerides of the oil or fat have been esterified with organic acids, such as for example acetic acid or lactic acid.

The term "*hydrogenation*" or "*hardening*" as used herein has its conventional meaning and refers to the addition of hydrogen to double bonds present in unsaturated fatty acids of monoglycerides, diglycerides and triglycerides, in this regard reference is made to Gunstone *et al.*, *The Lipid Handbook*, 2007.

The term "*milk*" as used herein has its conventional meaning and refers to the liquid produced by the mammary glands of mammals, such as bovines (e.g. cows), goats, sheep or camels.

The term "*fatty acid*" and "*fatty acid residue*" as used herein have their conventional meaning and are used interchangeably. The term fatty acid, refers to the fatty acid in a state wherein it is detached from the monoglyceride, diglyceride or triglyceride, the term fatty acid residue refers to the situation wherein the fatty acid is still bound to said glycerides. Upon fatty acid analysis (FAC analysis) of a sample, the fatty acid residues are removed from the glycerides and determined by means of for example NMR analysis, in this regard reference is made Gunstone et al., The Lipid Handbook, 2007.

DETAILED DESCRIPTION OF THE INVENTION

A first aspect of the present invention relates to a whipping agent for use in the preparation of edible toppings comprising on a dry weight basis:

- 25 to 75% by weight of a non-palm based edible oil or fat;
- 5 to 30 % by weight of a non-palm based alpha tending emulsifier;
- 1 to 15% by weight of a proteinaceous emulsifier; and
- 25 to 60% by weight carbohydrates.

Over the last years, the use of palm oil in food products has become increasingly controversial due to sustainability considerations. More and more consumers are of the opinion that cultivation of palm trees for the production of palm oil or palm kernel oil is associated with deforestation in tropical countries and the associated endangerment of species, such as orangutans and tigers. In view of these developments, food manufactures are seeking alternatives to palm oil, palm kernel oil and products derived therefrom, such as emulsifiers.

Whipping agents which do not comprise any palm derived bulk fat or palm derived (alpha-tending) emulsifiers are hitherto not available on the market.

In the art, there is moreover a high preference to use fully hardened palm kernel fat, because of its good resistance to oxidation, and the better whipping properties (as compared to non-hardened palm kernel fat).

With the present invention it has now become possible to prepare whipping agents with excellent properties, but without having to use palm based oils or emulsifiers.

In the whipping agent according to the present invention the non-palm based edible (bulk) oil or fat is preferably a vegetable oil or fat, more preferably the vegetable oil or fat is fully hydrogenated.

The vegetable oil or fat is preferably chosen from coconut oil, almond oil, cocoa butter, cotton seed oil, hazelnut oil, linseed oil, maize oil, olive oil, peanut oil, rapeseed oil, safflower oil, soybean oil, sunflower oil, high oleic sunflower oil and mixtures or fractions of any of these oils or fats. More preferably the vegetable oil or fat is chosen from coconut oil, rapeseed oil and mixtures or fractions of any of these oils or fats.

In an alternative embodiment the non-palm based edible (bulk) oil or fat in the whipping agent according to the present invention is preferably an animal oil or fat, preferably the animal oil or fat is selected from milk fat or butter oil and mixtures or fractions of any of these oils or fats.

The preferred non-palm based edible oil is coconut oil, preferably non-hardened coconut oil.

In a preferred embodiment of the present invention, the non-palm based edible oil or fat comprises at least 70% by weight, preferably at least 80% by weight and most preferably at least 90% by weight coconut oil, preferably refined coconut oil. With respect to coconut oil it is noted that it comprises only a relatively low amount of palmitic fatty acid residues (C16:0), i.e. between 7 and 10% by weight.

The amount of non-palm based edible (bulk) oil or fat in the whipping agent according to the invention is preferably between 25- 65 wt.%. More preferably the amount of non-palm based edible oil or fat is between 30-55 wt.%, most preferably the amount of non-palm based edible oil or fat is between 35-50 wt.% based on the whipping agent.

Furthermore, at present a large part of the emulsifiers used in whipping agents are still based on palm oil. Although a need exists to also replace these emulsifiers, the development of whipping agents which do not comprise palm oil based emulsifiers has not been straightforward. This has to do with the unique properties of palm oil.

From Table 1 below, it is clear that palm oil comprises exceptionally high amounts of palmitic (C16:0), oleic (C18:1), linoleic (C18:2) and linolenic (C18:3) fatty acids. Furthermore, the unsaturated fatty acids may readily be hydrogenated, such that a very high amount of saturated fatty acids is obtained. These properties make palm oil particularly suitable to be used as a source for the preparation of emulsifiers, such as alpha tending emulsifiers.

| Table 1: Typical fatty acid composition of palm oil in % by weight | |
|---|---|
| Fatty acid | Wt.% |
| C16:0 | 44.1 |
| C18:0 | 4.4 |
| C18:1 | 39.0 |
| 20:0 | 0.2 |
| 18:2 | 10.6 |
| 18:3 | 0.3 |

With the present invention it has now for the first time become possible to prepare a whipping agent wherein the palm kernel oil (i.e. the edible bulk oil/fat) has been replaced by a non-palm based oil and wherein also the emulsifiers are non-palm based. Remarkably, the whipping agent according to the present invention still has a very good performance with respect to overrun, consistency, stability and organoleptic properties.

The non-palm based alpha tending emulsifier used in the whipping agent according to the present invention preferably comprises organic acid esters of non-palm based vegetable oils or propylene glycol mono-esters of non-palm based vegetable oils, such as non-palm based propylene glycol mono-stearate (PGMS).

The whipping agent according to the present invention preferably comprises 7-28 wt.% of the non-palm based alpha tending emulsifier. More preferably the whipping agent comprises 9-26 wt.% of the non-palm based alpha tending emulsifier, most preferably the whipping agent comprises 11-24 wt.% of the non-palm based alpha tending emulsifier.

In a particularly preferred embodiment of the present invention the non-palm based alpha tending emulsifier is a lactic acid ester of a non-palm based vegetable oil or an acetic acid ester of a non-palm based vegetable oil. Depending on the intended use, the vegetable oil used for preparing these emulsifiers have preferably been hydrogenated, more preferably they have fully been hydrogenated. As a result, also the non-palm-based alpha tending emulsifiers are preferably fully hydrogenated.

Preferably, the non-palm based alpha tending emulsifiers comprise less 35% by weight, preferably less than 25% by weight palmitic fatty acid residues (C16:0). If the vegetable oil used for preparing the alpha tending emulsifiers has been hydrogenated, preferably more than 75% by weight, more preferably more than 80% by weight, of the fatty acid residues are stearic acid residues (CI8:0). This level of saturated stearic fatty acid residues cannot be achieved with palm oil based vegetable oils, because the total amount of C18 fatty acids (saturated and unsaturated) is too low.

Preferably, the non-palm based alpha tending emulsifier used comprises lactic acid esters of a monoglyceride and/or diglyceride, wherein the fatty acids of said glycerides are saturated or unsaturated and wherein the fatty acids have 6 to 30 carbon atoms.

In a preferred embodiment of the present invention the alpha tending emulsifier is a lactic acid ester of a hydrogenated or non-hydrogenated soy bean oil, sunflower oil, rapeseed oil or a fraction thereof. More preferably, the alpha tending emulsifier is chosen from lactic acid esters of hydrogenated or non-hydrogenated low-erucic rapeseed oil (LEAR).

Alternatively the alpha tending emulsifier is a lactic acid ester of hydrogenated or non- hydrogenated low-linolenic rapeseed oil (LLCAN) or a lactic acid ester of hydrogenated or non-hydrogenated high oleic rapeseed oil (HOCAN), or a fraction of any of these oils. In this regard it is further noted that the alpha tending emulsifier may also be a mixture of any of the above mentioned rapeseed oils or fractions thereof.

In relation to the above, it has further been found that it is particularly preferred to use lactic acid esters of hydrogenated rapeseed oil or hydrogenated fractions thereof, more preferably fully hydrogenated rapeseed oil or fractions thereof are used.

In table 2, the fatty acid composition of some fractions of rapeseed oil has been described.

| TABLE 2: Typical fatty acid composition of fractions of rapeseed oil in % by weight | | | |
|---|---|---|---|
| Fatty acid | Low-erucic rapeseed | Low linolenic | High oleic rapeseed |
| C16:0 | 3.6 | 3.9 | 3.4 |
| C18:0 | 1.5 | 1.3 | 2.5 |
| C18:1 | 61.6 | 61.4 | 77.8 |
| 20:1 | 1.4 | 1.5 | 1.6 |
| 22:1 | 0.2 | 0.1 | 0.1 |
| 18:2 | 21.7 | 28.1 | 9.8 |
| 18:3 | 9.6 | 2.1 | 2.6 |

From this table it is clear that upon fully hardening of these fractions of rapeseed oil the total amount of C18:0 will be very high, which is considered advantageous.

In a preferred embodiment the ratio by weight of the non-palm based edible oil or fat and the non-palm based alpha tending emulsifier is between 1:1 and 20:1, more preferably said ratio is between 1.5:1 and 16:1 and most preferably said ratio is between 2:1 and 8:1.

The proteinaceous emulsifier of the whipping agent according to the present invention may be from vegetable, or animal origin. Vegetable proteinaceous emulsifiers are preferably selected from pea proteins or soy proteins, more preferably from pea proteins. Animal proteinaceous emulsifiers are preferably selected from milk proteins and/or caseinates, more preferably from caseinates.

The proteinaceous emulsifier of the whipping agent according to the present invention preferably comprises at least 80% by weight of a caseinate salt, more preferably at least 90% by weight of the whipping agent. The casein salt is preferably sodium caseinate or calcium caseinate or a mixture thereof. The caseinate salt may be spray dried or roller dried.

Alternatively, the proteinaceous emulsifier used in the whipping agent according to the present invention preferably comprises at least 80% by weight of total milk protein, more preferably at least 90% by weight of milk protein. The milk protein is preferably derived from bovine milk.

In a particularly preferred embodiment of the present invention the non-palm based edible oil is coconut oil, preferably refined coconut oil, or a fraction thereof, the non-palm based alpha tending emulsifier is a hydrogenated lactic acid ester of rapeseed oil, preferably fully hydrogenated low-erucic rapeseed oil and the proteinaceous emulsifier is a caseinate salt, preferably sodium caseinate.

In addition, the composition may contain additional, preferably non-palm, emulsifiers selected from the group of: mono- diglycerides not being alpha tending; SSL (sodium stearoyl lactylate; CSL (calcium stearoyl lactylate); DATEM (diacetyl tartaric acid ester of mono- and diglycerides); TWEEN 60 (Polysorbate 60 (polyoxyethylene (20) sorbitan monostearate); TWEEN 80, (polyoxyethylene (20) sorbitan monooleate); sucrose esters of fatty acids; PGE (polyglycerol esters of fatty acids), to modify structure, aeration etc, in an amount of preferably less than 5% by weight of the whipping agent.

The carbohydrates used in the composition of the invention comprise carbohydrates customary in the art for manufacturing whipping agents; preferably these carbohydrates comprise for example mono and/or disaccharides, (sucrose, glucose, lactose, fructose), hydrolyzed starches like glucose syrups, preferably having a DE (dextrose equivalents) between 26-50 (in liquid or in dry form) and/or maltodextrins having a DE between 10-25.

The whipping agent according to the present invention is preferably formulated as a powder, which is beneficial for dosing and shelf-life. A preferred way of preparing such a powder is by means of spray drying.

A second aspect of the present invention relates to a method for preparing a whipping agent as described above. The method used for preparing such a whipping agent comprises the following steps:

 i. mixing the proteinaceous emulsifier and carbohydrates with water, such that an aqueous mixture is obtained;
 ii. adding the non-palm based edible oil or fat and the non-palm based alpha tending emulsifier to the mixture;
 iii. spray drying said mixture, such that a powder is obtained.

Preferably, before step iii) is carried out, the mixture is homogenized, such that the non-palm based edible oil and other ingredients are evenly mixed trough the mixture and the fat particles have a desired size.

A third aspect of the present invention relates to an instant edible powder composition comprising the whipping agent as described above and further comprising one or more substances chosen from sugar, milk powder, hydrocolloids, coloring agents, flavoring agents, or a combination thereof. Depending on the intended use, the amount of milk powder, sugar and other agents may vary.

A fourth aspect of the present invention relates to a method for preparing a whipped topping comprising whipping a whipping agent as described above in a food acceptable liquid, preferably at a temperature between 4°C and 10°C to an overrun of 50-400%. This process is usually carried out in large industrial kitchens and local bakeries, wherein the topping is prepared and added to different kinds of food products, such as cake fillings, desserts, pastry, ready to eat meals etc.

The whipped topping preferably comprises at least 2 wt.% of whipping agent, more preferably at least 4 wt.% of whipping agent and most preferably between 6-25 wt.% of whipping agent based on the weight of the whipped topping.

A last aspect of the present invention relates to an edible topping prepared from the whipping agent as has been described above for the whipped topping. The edible topping is preferably an instant ice cream, a mousse, creme Chantilly or an aerated filling, such as a cake filling.

In an aspect of the present invention, the non-palm based alpha tending emulsifier is a propylene glycol mono-ester of non-palm based vegetable oils, such as non-palm based propylene glycol mono-stearate (PGMS). Embodiments of this aspect of the invention are listed below.

 1. A whipping agent which is free from palm based bulk edible oil and fat and free from palm based emulsifiers for use in the preparation of edible toppings comprising on a dry weight basis:

  -  25 to 75% by weight of a non-palm based edible oil or fat;
  -  5 to 30 % by weight of a non-palm based alpha tending emulsifier;
  -  1 to 15% by weight of a proteinaceous emulsifier; and

- 25 to 60% by weight carbohydrates;

wherein the non-palm based alpha tending emulsifier is a propylene glycol mono-ester of a non-palm based vegetable oil; and which non-palm based alpha tending emulsifier has been prepared from hydrogenated non-palm vegetable oils and more than 75% by weight of the fatty acid residues are stearic acid.

2. Whipping agent according to embodiment 1, wherein the non-palm based edible oil or fat is a non-hydrogenated natural vegetable oil or fat.

3. Whipping agent according to embodiment 1 or 2, wherein more than 80% by weight of the fatty acid residues are stearic acid.

4. Whipping agent according to any of the previous embodiments, wherein the ratio by weight of the non-palm based edible oil or fat and the non-palm based alpha tending emulsifier is between 1:1 and 20:1, preferably between 1.5:1 and 16:1 and most preferably between 2:1 and 8:1.

5. Whipping agent according to embodiment 1, wherein the non-palm based edible oil or fat comprises less than 35% by weight palmitic acid residues, preferably less than 25% of said residues.

6. Whipping agent according to any of the previous embodiments, comprising 25-65 wt.%, preferably 30-55 wt.% and more preferably, 35-50 wt.% of the non-palm based edible oil or fat.

7. Whipping agent according to any of the previous embodiments, wherein the non-palm based edible oil or fat is chosen from the group consisting of almond oil, cocoa butter, coconut oil, cotton seed oil, hazelnut oil, linseed oil, maize oil, olive oil, peanut oil, rapeseed oil, safflower oil, soybean oil, sunflower oil, high oleic sunflower oil, milk fat and mixtures or fractions of any of these oils or fats.

8. Whipping agent according to any of the previous embodiments, wherein the non-palm based edible oil or fat comprises at least 70% by weight, preferably at least 80% by weight and most preferably at least 90% by weight coconut oil, preferably refined coconut oil.

9. Whipping agent according to any of the previous embodiments, wherein the proteinaceous emulsifier comprises at least 80% by weight of a caseinate salt, preferably sodium caseinate or calcium caseinate or a mixture thereof.

10. Whipping agent according to any of the previous embodiments, wherein the proteinaceous emulsifier comprises at least 80% by weight total milk protein, preferably derived from bovine milk.

11. Whipping agent according to any of the previous embodiments, wherein the agent is a powder, preferably obtainable by spray-drying.

12. Method for preparing a whipping agent according to any of the embodiments 1-11, comprising the steps of:

i. mixing the proteinaceous emulsifier and carbohydrates with water, such that an aqueous mixture is obtained;
ii. adding the non-palm based edible oil or fat and the non-palm based alpha tending emulsifier to the mixture;
iii. spray drying said mixture, such that a powder is obtained.

13. A process of preparing an instant edible powder composition, said process comprising combining the whipping agent according to any of the embodiments 1-11 with one or more substances chosen from sugar, milk powder, hydrocolloids, coloring agents, flavoring agents, or a combination thereof.

14. Method for preparing a whipped topping comprising whipping a whipping agent according to embodiments 1-11 or the edible powder obtained by the process according to embodiment 13 in a food acceptable liquid to an overrun of 50-400%.

15. Method according to embodiment 14, wherein the whipped topping is an instant ice cream, a mousse, creme Chantilly or an aerated filling, such as a cake filling.

The invention will now be illustrated further by means of the following non-limiting examples.

**EXAMPLES**

In the following examples and comparative experiment toppings were prepared from different whipping agents.

**Examples 1-4 and comparative experiments 1 and 2**

A) Preparation of whipping agent

In the whipping agents according to the present invention the non-palm based edible (bulk) oil was refined coconut oil (from Cargill, the Netherlands), the proteinaceous emulsifier used was sodium caseinate (EM7, Friesland-Campina DMV), as a carbohydrate source use was made of a dried glucose syrup Glucidex IT 33(Roquette, France). The non-palm based alpha tending emulsifier used was Grindsted Lactem R22, a lactic acid ester of rapeseed oil from DuPont, USA. In the comparative experiment 1, instead of a lactic acid ester of rapeseed oil use was made of a lactic acid ester of palm oil (Grindsted Lactem P22, DuPont). The bulk fat used in the comparative example 2 was non-hydrogenated palm kernel oil (non-HVO palm kernel oil) from Cargill; and the palm based emulsifier was Grindsted Lactem P22 (Dupont).

The whipping agents referred to above were prepared as follows. First the sodium caseinate and glucose syrup were mixed in a vessel comprising water having a temperature of about 25°C. The coconut oil or the palm kernel oil and the lactic acid ester of rapeseed oil or of palm oil were melted together and added to the aqueous solution. The oil/water mixture thus obtained was stirred, homogenized at about 100 bar at 70°C and subsequently spray dried at approx. 215°C T(in) and approx. 100°C T(out), such that a whipping agent in powder form was obtained. The whipping agents obtained had on a dry weight basis the following composition:

Table 3: Composition of whipping agents

| Ingredients (wt.%) | Example 1 | Example 2 | Example 3 | Example 4 | Comparative experiment 1 | Comparative experiment 2 |
|---|---|---|---|---|---|---|
| Non HVO Palm kernel oil | | | | | | 35 |
| Coconut oil | 36 | 36 | 36 | 35 | 35 | |
| Carbohydrates - glucose syrup | 42 | 41 | 40 | 39 | 41 | 41 |
| Na-Caseinate | 6 | 6 | 6 | 6 | 6 | 6 |
| Emulsifier* | 16 | 17 | 18 | 20 | 18 | 18 |
| * emulsifier used in examples was a lactic acid ester of rapeseed oil. In the comparative experiments the emulsifier was a lactic acid ester of palm oil. | | | | | | |

B) Preparation of whipped products

The above mentioned whipping agents were used for the preparation of whipped products. This was done by mixing with a mixer (Hobart, model N-50) 30 g of the above mentioned whipping agents, with 250 ml cold, full fat milk. Mixing continued for three minutes at the maximum speed (3).

C) Firmness and overrun

Of the whipped products prepared above the firmness and overrun were determined. The foam obtained was brought into an overrun cup, with a pre-defined volume and weight. The % overrun was calculated by means of the following formula:

$$d / (b-a) \times 100 - 100 = \% \text{ overrun}$$

wherein: a = weight of empty cup
b = weight of cup filled with whipped product
d = cup volume

For determining the firmness use was made of a texture analyzer TA-XT2i of Stable Micro Systems (force required to penetrate the foam), with the following settings: speed 1mm/s, time 25 seconds, measured value: force after 10 seconds penetration cylindrical base (15 gram). The measurement was done in a cup filled with foam and at the latest 5 minutes after the product had been whipped.

From the results in table 4 it is clear that with the whipping agents according to the present invention it is possible to prepare a whipped product which meets the requirements of a traditional whipped product, prepared with a whipping agent (i.e. palm based) already known in the art. Hence, the inventors have now shown that it is possible to successfully use only non-palm based ingredients in a whipping agent which can be used to prepare e.g. cake fillings, decoration cream etc.

Table 4: Overrun and firmness of whipped products

| | Example 1 | Example 2 | Example 3 | Example 4 | Comparative experiment 1 | Comparative experiment 2 |
|---|---|---|---|---|---|---|
| Overrun (%) | 405 | 413 | 420 | 405 | 402 | 445 |
| Firmness (gram) | 107 | 104 | 108 | 95 | 98 | 88 |

D) Preparation of instant chocolate mousse

The whipping agent of example 1 according to the present invention as described in paragraph A) above was used for the preparation of a chocolate mousse. To this end 25 grams of said whipping agent was dry mixed with 25 grams icing sugar, 3 grams instant gelatin and 17 grams cocoa powder. Subsequently, 70 grams of this dry mixture was mixed with 200 ml cold milk and whipped with an electric mixer (Hobart, model N-50) for 3 minutes at maximum speed. The mousse obtained was transferred into serving dishes and refrigerated for 30 minutes at 5-7°C.

E) Sensory evaluation of chocolate mousse

The chocolate mousse according to the invention, as described in paragraph D) above, was compared with a comparative chocolate mousse, which was prepared as described in paragraph D) above, but using a whipping agent with a lactic acid ester of palm oil as emulsifier (comparative experiment 3), which on a dry weight basis had the following composition:

Table 5: Composition of whipping agent

| Ingredients (wt.%) | Comparative experiment 3 |
|---|---|
| Fully hydrogenated coconut oil (Cargill) | 50 |
| Glucose syrup DE33 (Roquette) | 32 |
| Na-Caseinate (FrieslandCampina DMV) | 9 |
| Grindsted Lactem P22 (Dupont) | 9 |

A trained sensory panel, consisting of 16 people, rated several sensory attributes of the chocolate mousse according to the invention, as described in paragraph D) and the comparative chocolate mousse with the palm-based whipping agent of comparative experiment 3. The attributes were rated on a scale from 0-100, where 0 stands for that the attribute is not present and 100 means that the attribute is very strong. The results are presented in the table below:

Table 6: Sensory attributes of chocolate mousse

| Attribute | Chocolate mousse of par. D) | Comparative chocolate mousse |
|---|---|---|
| Chocolate flavor | 47 | 37 |
| Creamy / thick appearance | 46 | 48 |
| Creamy / smooth mouthfeel | 58 | 49 |
| Speckles in appearance | 30 | 31 |

(continued)

| Attribute | Chocolate mousse of par. D) | Comparative chocolate mousse |
|---|---|---|
| Sweet flavor | 42 | 45 |
| Bitter flavor | 39 | 39 |

The chocolate mousse according to the invention scored particularly high compared to the comparative chocolate mousse on two sensory attributes, the remaining attributes were comparable. The chocolate mousse according to the invention has a delicious chocolate taste and a full, round bodied creaminess compared to the comparative mousse.

F) Preparation of an aerated filling

The whipping agent of example 1 according to the present invention as described in paragraph A) above was used for the preparation of an aerated cake filling. To this end 70 grams of said whipping agent was dry mixed with 50 grams icing sugar, 12 grams skimmed milk powder and 4 grams modified starch. Subsequently, 136 grams of this dry mixture was mixed with 250 ml cold milk and whipped with an electric mixer (Hobart, model N-50) for 3 minutes at maximum speed. The cake filling was placed on a serving dish and refrigerated for one hour at 5-7°C. The cake filling obtained was tested by an expert panel and it was found that it had a full velvet type of creaminess, a good volume and firmness and an excellent mouthfeel.

G) Preparation of instant ice cream

The whipping agent of example 1 according to the present invention as described in paragraph A) above was used for the preparation of instant ice cream. To this end 31 grams of said whipping agent was dry mixed with 15 grams of an organic creamer (Vana-Crema 70), 29.6 grams icing sugar, 14 grams dextrose, 10 grams skimmed milk powder and 0.40 grams of a stabilizer (Lygomme 34 from Cargill, a mixture of guar gum and carrageenan). Subsequently, 100 grams of this dry mixture was mixed with 200 ml cold milk and whipped with an electric mixer (Hobart, model N-50) for 3 minutes at maximum speed. The whipped cream was transferred to serving dishes and was frozen for 2 hours at minus 20°C. The instant ice cream obtained was tested by an expert panel and it was found that it had a nice milky taste and a full velvet mouthfeel. The melting profile was comparable to traditional palm-oil based ice cream.

H) Preparation of Creme Chantilly

The whipping agent of example 1 according to the present invention as described in paragraph A) above was used for the preparation of Creme Chantilly. To this end 28 grams of said whipping agent was dry mixed with 37.8 grams of icing sugar, 3 grams of skimmed milk powder, 0.80 grams of stabilizer (Gelogen BDC 75, Cargill, a mixture of carrageenan and phosphates) and 0.40 grams of modified starch (Parcelli BC, from Avebe). Subsequently, 70 grams of this dry mixture was mixed with 200 ml cold milk and whipped with an electric mixer (Hobart, model N-50) for 3 minutes at maximum speed. The creme obtained was transferred to serving dishes and refrigerated at 5-7°C for 30 minutes. The creme was tested by an expert panel and it was found that it had excellent decoration properties and a full velvet mouthfeel.

I) Sensory assessment of whipped product

The sensory and physical attributes of whipped products, comprising either the whipping agent of Example 1 or the whipping agent of comparative example 2, were compared.

Preparation of the whipped product

90 grams of the whipping agent (according to example 1 or comparative example 2) was mixed using a Kitchenaid machine, with 60 grams of icing sugar and 375 ml cold low fat milk (4°C). Mixing continued for 3.5 minutes at maximum speed.

Sensory assessment

A trained sensory panel, consisting of 16 people, rated several sensory and physical attributes of the obtained whipped products. The attributes were rated on a scale from 0-100, where 0 stands for that the attribute is not present and 100 means that the attribute is very strong. The results are presented in the table below:

Table 7: Sensory and physical attributes

| Attribute | Example 1 | Comparative experiment 2 |
|---|---|---|
| Mouthfeel / fullness | 70 | 50 |
| Mouthfeel / melting, clean eating | 80 | 70 |
| Taste / milkiness | 90 | 70 |
| Cut-ability (e.g. when used as a cake filling) | 90 | 60 |

The whipped product according to the invention scored high on the physical attribute 'cut-ability', which means that the whipped product does not stick to the knife when the whipped product is cut into pieces.

**Examples 5-7 and comparative experiment 4**

Whipping agents according to the present invention were prepared by the method as described in paragraph A) above, but different ingredients were used. The whipping agents obtained had on a dry weight basis the following composition:

Table 8: Composition of whipping agents

| Ingredients (wt.%) | Example 5 | Example 6 | Example 7 | Comparative experiment 4 |
|---|---|---|---|---|
| Refined palm oil (Cargill) | | | | 36 |
| Refined coconut oil (Cargill) | 50 | 36 | 36 | |
| Dried glucose syrup DE47 (Roquette) | 28 | 48 | 36 | 40 |
| Na-Caseinate (FrieslandCampina DMV) | 6 | 6 | 12 | 6 |
| Emulsifier* | 16 | 10 | 16 | 18 |
| * emulsifier used in examples was a lactic acid ester of rapeseed oil (Grindsted Lactem R22, DuPont). In the comparative experiment the emulsifier was a lactic acid ester of palm oil (Grindsted Lactem P22, DuPont). | | | | |

These whipping agents were prepared into whipped products as described in paragraph B) above. The obtained overrun and firmness were assessed as described in paragraph C) above. Except for that the firmness was measured at two time points, i.e. firstly at the latest 5 minutes after the product had been whipped (I) and secondly after being stored overnight at 4°C (II). The results are shown in the table below.

Table 9: Overrun and firmness of whipped products

| | Example 5 | Example 6 | Example 7 | Comparative experiment 4 * |
|---|---|---|---|---|
| Overrun (%) | 350 | 286 | 375 | 379 |
| Firmness (I) (gram) | 79 | 35 | 91 | 54 |
| Firmness (II) (gram) | 111 | 68 | 88 | 51 |
| * Comparative experiment 4 showed syneresis. | | | | |

**Example 8**

A dairy free whipping agent was prepared according to the method described in paragraph A), but different ingredients were used. The obtained whipping agent had on a dry weight basis the following composition:

Table 10: Composition of dairy free whipping agent

| Ingredients (wt.%) | Example 8 |
|---|---|
| Refined coconut oil (Cargill) | 35 |

(continued)

| Ingredients (wt.%) | Example 8 |
|---|---|
| Dried glucose syrup DE47 (Roquette) | 42.7 |
| Pea protein (Nutralys S85F, Roquette, with a protein content of 79%) | 6 |
| Grindsted Lactem R22 (DuPont) | 13 |
| Di Potassium Phosphate (E340) | 1.3 |
| Dimodan MOHR (MODI) (Dupont; palm free mono-diglyceride of fatty acids) | 2 |

Preparation of the whipped product.

50 grams of the dairy free whipping agent was mixed using a mixer (Hobart, model N-50) with 50 grams of sugar and 200ml cold water. Mixing continued for three minutes at the maximum speed (3).

The obtained overrun and firmness were assessed as described in paragraph C) above. Except for that the firmness was measured at two time-points, i.e. firstly at the latest 5 minutes after the product had been whipped (I) and secondly after being stored overnight at 4°C (II). The results are shown in the table below.

Table 11: Overrun and firmness of whipped dairy free product

| | Example 8 |
|---|---|
| Overrun (%) | 293 |
| Firmness (I) (gram) | 37 |
| Firmness (II) (gram) | 90 |

## Claims

1. A whipping agent which is free from palm based bulk edible oil and fat and free from palm based emulsifiers for use in the preparation of edible toppings comprising on a dry weight basis:

   - 25 to 75% by weight of a non-palm based edible oil or fat;
   - 5 to 30 % by weight of a non-palm based alpha tending emulsifier;
   - 1 to 15% by weight of a proteinaceous emulsifier; and
   - 25 to 60% by weight carbohydrates;

   wherein the non-palm based alpha tending emulsifier is an acetic acid ester of a non-palm based vegetable oil; and which non-palm based alpha tending emulsifier has been prepared from hydrogenated non-palm vegetable oils and more than 75% by weight of the fatty acid residues are stearic acid.

2. Whipping agent according to claim 1, wherein the non-palm based edible oil or fat is a non-hydrogenated natural vegetable oil or fat.

3. Whipping agent according to claim 1 or 2, wherein more than 80% by weight of the fatty acid residues are stearic acid.

4. Whipping agent according to any of the previous claims, wherein the ratio by weight of the non-palm based edible oil or fat and the non-palm based alpha tending emulsifier is between 1:1 and 20:1, preferably between 1.5:1 and 16:1 and most preferably between 2:1 and 8:1.

5. Whipping agent according to claim 1, wherein the non-palm based edible oil or fat comprises less than 35% by weight palmitic acid residues, preferably less than 25% of said residues.

6. Whipping agent according to any of the previous claims, comprising 25-65 wt.%, preferably 30-55 wt.% and more preferably, 35-50 wt.% of the non-palm based edible oil or fat.

7.  Whipping agent according to any of the previous claims, wherein the non-palm based edible oil or fat is chosen from the group consisting of almond oil, cocoa butter, coconut oil, cotton seed oil, hazelnut oil, linseed oil, maize oil, olive oil, peanut oil, rapeseed oil, safflower oil, soybean oil, sunflower oil , high oleic sunflower oil, milk fat and mixtures or fractions of any of these oils or fats.

8.  Whipping agent according to any of the previous claims, wherein the non-palm based edible oil or fat comprises at least 70% by weight, preferably at least 80% by weight and most preferably at least 90% by weight coconut oil, preferably refined coconut oil.

9.  Whipping agent according to any of the previous claims, wherein the proteinaceous emulsifier comprises at least 80% by weight of a caseinate salt, preferably sodium caseinate or calcium caseinate or a mixture thereof.

10. Whipping agent according to any of the previous claims, wherein the proteinaceous emulsifier comprises at least 80% by weight total milk protein, preferably derived from bovine milk.

11. Whipping agent according to any of the previous claims, wherein the agent is a powder, preferably obtainable by spray-drying.

12. Method for preparing a whipping agent according to any of the claims 1-11, comprising the steps of:

    i. mixing the proteinaceous emulsifier and carbohydrates with water, such that an aqueous mixture is obtained;
    ii. adding the non-palm based edible oil or fat and the non-palm based alpha tending emulsifier to the mixture;
    iii. spray drying said mixture, such that a powder is obtained.

13. A process of preparing an instant edible powder composition, said process comprising combining the whipping agent according to any of the claims 1-11 with one or more substances chosen from sugar, milk powder, hydrocolloids, coloring agents, flavoring agents, or a combination thereof.

14. Method for preparing a whipped topping comprising whipping a whipping agent according to claims 1-11 or the edible powder obtained by the process according to claim 13 in a food acceptable liquid to an overrun of 50-400%.

15. Method according to claim 14, wherein the whipped topping is an instant ice cream, a mousse, creme Chantilly or an aerated filling, such as a cake filling.

EP 3 639 672 A1

Europäisches Patentamt
European Patent Office
Office européen des brevets

# EUROPEAN SEARCH REPORT

Application Number

EP 19 21 5882

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 3 423 211 A (MILES JOHN J JR ET AL) 21 January 1969 (1969-01-21) | 1,3-15 | INV. A23D9/00 A23D9/013 A23D9/02 A23G3/34 A23G9/52 A23L9/20 A23L29/10 A23P10/40 A23P30/40 |
| Y | * column 1 - column 2, paragraph 2 * * column 3; claims 1-19; examples 1-3 * ----- | 2 | |
| Y | GB 1 053 094 A (UNILEVER LTD.) 27 September 1963 (1963-09-27) * example 1 * ----- | 2 | |
| Y | EP 0 047 034 A1 (DMV CAMPINA BV [NL]) 10 March 1982 (1982-03-10) * table 2 * ----- | 2 | |
| A | WO 2008/059220 A1 (DANISCO [DK]; BECH ALLAN TORBEN [DK] ET AL.) 22 May 2008 (2008-05-22) * examples 1-2 * * line 21, paragraph 2 - line 26 * * page 12, line 5 - line 21 * * page 13, line 35 * * page 14, line 15 - line 22 * ----- | 1-15 | |

TECHNICAL FIELDS SEARCHED (IPC)

A23L
C11C

The present search report has been drawn up for all claims

| Place of search | Date of completion of the search | Examiner |
|---|---|---|
| Munich | 20 February 2020 | Schlegel, Birgit |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

14

## ANNEX TO THE EUROPEAN SEARCH REPORT
## ON EUROPEAN PATENT APPLICATION NO.

EP 19 21 5882

This annex lists the patent family members relating to the patent documents cited in the above-mentioned European search report.
The members are as contained in the European Patent Office EDP file on
The European Patent Office is in no way liable for these particulars which are merely given for the purpose of information.

20-02-2020

| Patent document cited in search report | | Publication date | Patent family member(s) | | Publication date |
|---|---|---|---|---|---|
| US 3423211 | A | 21-01-1969 | DE | 1692532 A1 | 05-08-1971 |
| | | | FI | 48239 B | 30-04-1974 |
| | | | GB | 1091270 A | 15-11-1967 |
| | | | US | 3423211 A | 21-01-1969 |
| GB 1053094 | A | 27-09-1963 | NONE | | |
| EP 0047034 | A1 | 10-03-1982 | AT | 11358 T | 15-02-1985 |
| | | | CA | 1174896 A | 25-09-1984 |
| | | | DE | 3168491 D1 | 07-03-1985 |
| | | | DK | 371581 A | 23-02-1982 |
| | | | EP | 0047034 A1 | 10-03-1982 |
| | | | NL | 8004765 A | 28-11-1980 |
| | | | US | 4375485 A | 01-03-1983 |
| WO 2008059220 | A1 | 22-05-2008 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **GUNSTONE et al.** The Lipid Handbook. 2007

- **GERARD L. ; HASSENHUETTI.** *Food Emulsifiers and their applications,* 2008